# EUROPÄISCHE PATENTANMELDUNG

(11) **EP 3 246 649 A1**
(43) Veröffentlichungstag der Anmeldung: **22.11.2017**
(21) Anmeldenummer: 17169260.1
(22) Anmeldetag: 03.05.2017
(51) Int. Cl.: F28D 20/00

(54) **WÄRMESPEICHERANORDNUNG**

(30) Priorität: 12.05.2016 DE 102016108829
(71) Anmelder: Wolters, Laurens G. J., 7131 GL Lichtenvoorde (NL)
(72) Erfinder: Wolters, Laurens G. J., 7131 GL Lichtenvoorde (NL)
(74) Vertreter: Patentanwälte ter Smitten Eberlein-Van Hoof Rütten Partnerschaftsgesellschaft mbB

(57) **Zusammenfassung**

Wärmespeicheranordnung (10) zur Zwischenspeicherung von Wärmeenergie, mit
mindestens einem steifen Wärmetauscherelement (20), das einen Flüssigkeitseinlass (22) und einen Flüssigkeitsauslass (24) aufweist und in dem ein flüssiger nicht-wässeriger Wärmeträger (25) strömt, dessen Gefrierpunkt unter -10°C liegt, und
mindestens einem flexiblen und geschlossenen Wärmespeicherbehälter (30, 40), welcher ein Wärmespeichermedium (34) enthält, wobei der flexible Wärmespeicherbehälter (30, 40) an dem mindestens einen steifen Wärmetauscherelement (20) anliegt, so dass eine Wärmeübertragung zwischen dem flüssigen Wärmeträger (25) und dem Wärmespeichermedium(32) erfolgt.

## Beschreibung

Die Erfindung betrifft eine Wärmespeicheranordnung zur Zwischenspeicherung von Wärmeenergie sowie eine Gebäudeheizungsanlage mit einer Wärmespeicheranordnung.

Derartige Wärmespeicheranordnungen sind insbesondere in Verbindung mit Wärmepumpen und Solarkollektoren bekannt. Besonders vorteilhaft sind hierbei Niedertemperatur-Wärmespeicher, die üblicherweise mit einer Wärmespeichermedium-Temperatur zwischen 0 und 20 °C betrieben werden. Dabei ist der Wärmespeicher über einen ersten Wärmeträgerkreislauf mit einer Wärmepumpe verbunden, wobei die Wärmepumpe dem Wärmespeicher Wärme entzieht und für die Nutzung der Wärme zum Heizen von Gebäuden oder Aufheizen von Warmwasser auf ein höheres Temperaturniveau hebt. Der Wärmespeicher ist über einen zweiten Wärmeträgerkreislauf mit Solarkollektoren verbunden, die dem Wärmespeicher Wärme zuführen und den Speicher auf diese Weise "aufladen". An kalten Tagen wird dem Wärmespeicher mehr Wärme durch die Wärmepumpe entnommen als durch die Solarkollektoren zugeführt, so dass die Temperatur des Wärmespeichermediums im Wärmespeicher auf 0 °C sinkt und das Wärmespeichermedium zu gefrieren beginnt. Beim Gefriervorgang wird aufgrund des Phasenwechsels des Wärmespeichermediums latente Wärme frei, die die Wärmepumpe über den ersten Wärmeträgerkreislauf dem Wärmespeicher entzieht, bis das gesamte Wärmespeichermedium vollständig gefroren ist. Auf diese Weise kann die Wärmepumpe auch an kalten Tagen betrieben werden, an denen keine Solarenergie zur Verfügung steht. Der Wärmespeicher kann wieder "aufgeladen" werden, indem beispielsweise an sonnigen Tagen dem Wärmespeicher über den zweiten Wärmeträgerkreislauf mehr Wärme zugeführt als von der Wärmepumpe entzogen wird. Eine andere Möglichkeit, den Wärmespeicher wieder "aufzuladen", ist, den Wärmespeicher zum Kühlen von Gebäuden zu verwenden. Dabei wird die dem Gebäude entnommene Wärme dem Wärmespeicher zugeführt, der zwischen dem Wärmespeicher und dem Gebäude zirkulierende Wärmeträger abgekühlt und das gefrorene Wärmespeichermedium aufgeschmolzen.

Die DE 10 2010 037 474 A1 offenbart eine derartige Wärmespeicheranordnung mit einem Wärmespeicherbehälter, welcher aus einem festen und steifen Material ausgebildet ist und vollständig im Erdreich angeordnet ist. Im Wärmespeicherbehälter sind mehrere rohrförmige Wärmetauscherelemente angeordnet, die von einem in dem Wärmespeicherbehälter enthaltenen Wärmespeichermedium umgeben sind und an unterschiedliche Kreisläufe angeschlossen sind. Ein erstes Wärmetauscherelement ist mit einer Wärmepumpe und ein zweites Wärmetauscherelement ist mit einer Wärmequelle verbunden, wobei das erste Wärmetauscherelement die Kristallisation des Wärmespeichermediums und das zweite Wärmetauscherelement das Aufschmelzen des Wärmeträgermediums bewirkt.

Nachteilig an der beschriebenen Ausführung ist die aufwendige und kostenintensive Montage der Wärmespeicheranordnung im Erdreich, da ein Graben ausgehoben werden muss, um den schweren und massiven Wärmespeicherbehälter darin anzuordnen.

Der Erfindung liegt daher die Aufgabe zugrunde, eine Wärmespeicheranordnung zur Zwischenspeicherung von Wärmeenergie derart weiterzuentwickeln, dass diese auf eine einfache und kostengünstige Weise herstellbar und montierbar ist.

Diese Aufgabe wird durch eine Wärmespeicheranordnung mit den Merkmalen des Hauptanspruchs gelöst.

Erfindungsgemäß weist die Wärmespeicheranordnung mindestens ein steifes Wärmetauscherelement und mindestens einen flexiblen Wärmespeicherbehälter auf, wobei das Wärmetauscherelement plattenförmig ausgeführt ist und mit der Grundfläche großflächig an einer Außenfläche des Wärmespeicherbehälters anliegt.

Das Wärmetauscherelement ist dünnwandig ausgeführt, wobei die dünnen Wände des Wärmetauschelements einen Innenraum einschließen. Das Wärmetauscherelement weist an einer ersten Stirnseite einen Flüssigkeitseinlass und einen Flüssigkeitsauslass auf, so dass durch den Flüssigkeitseinlass ein Wärmeträger in das Wärmetauscherelement einströmt und durch den Flüssigkeitsauslass der Wärmeträger aus dem Wärmetauscherelement ausströmt. Die Leitung des Wärmeträgers innerhalb des Wärmetauscherelements erfolgt über eine im Innenraum angeordnete Leitungsrippe, die sich von der ersten Stirnseite in Richtung einer gegenüberliegenden zweiten Stirnseite erstreckt und jeweils einen Kanal zwischen dem Flüssigkeitseinlass und der zweiten Stirnseite sowie zwischen dem Flüssigkeitsauslass und der zweiten Stirnseite bildet. An dem der zweiten Stirnseite zugewandten Ende der Leitungsrippe weist die Leitungsrippe eine Öffnung auf, durch die die beiden Kanäle miteinander fluidisch verbunden sind. Auf diese Weise erfolgt eine U-förmige Durchströmung des Wärmetauscherelements, wobei das gesamte Wärmetauscherelement mit dem Wärmeträger durchströmt wird.

Der Wärmespeicherbehälter ist flexibel ausgeführt und weist einen Einlass auf, durch den der Wärmespeicherbehälter mit einem Wärmespeichermedium vollständig befüllbar ist. Der Wärmespeicherbehälter liegt mit der Unterseite an einer horizontalen Fläche, beispielsweise dem Erdreich, auf und weist im mit dem Wärmespeichermedium vollständig gefüllten Zustand eine kissenartige Form auf.

Als Wärmespeichermedium wird ein Phasenwechselmasse eingesetzt, deren latente Wärme, wesentlich größer ist, als ihre spezifische Wärmekapazität. Dabei wird die Enthalpie der Phasenwechselmasse ausgenutzt, indem das Wärmespeichermedium beim Schmelzen sehr viel Wärme aufnimmt und beim Erstarren die beim Schmelzen aufgenommene Wärme an die Umgebung abgibt. Auf diese Weise kann beispielsweise die überschüssige Wärmemenge, die an warmen Tagen zum Aufheizen vom Warmwasser nicht benötigt wird, zum Aufschmelzen des Wärmespeichermediums genutzt werden und dadurch im Wärmespeichermedium gespeichert werden. Außerdem kann die Wärmespeicheranordnung "aufgeladen" werden, indem die Wärmespeicheranordnung zum Kühlen von Gebäuden genutzt wird. Dabei zirkuliert ein Wärmeträger zwischen dem Gebäude und der Wärmetauscheranordnung, wobei der Wärmeträger Wärme vom Gebäude aufnimmt und dem Wärmespeichermedium zuführt. Um die im Wärmespeichermedium gespeicherte Wärmemenge wieder nutzen zu können, wird die Erstarrung des Wärmespeichermediums durch einen stetigen Wärmeentzug erzwungen, indem der Wärmeträger mit einer Temperatur unterhalb der Erstarrungstemperatur des Wärmespeichermediums das Wärmetauscherelement durchströmt.

Ausschlaggebend für die Qualität der Wärmeübertragung zwischen dem Wärmetauscherelement und dem Wärmespeicherbehälter ist die Wärmeübertragungsfläche, die das Wärmetauscherelement und der Wärmespeicherbehälter miteinander bilden. Durch die Kombination aus dem steifen Wärmetauscherelement, das sich bei hohen mechanischen Belastungen nicht wesentlich verformt, und dem flexiblen Wärmespeicherbehälter, der sich bereits bei geringen mechanischen Belastungen verformt, passt sich der Wärmespeicherbehälter an die Form des Wärmetauscherelements an und bewirkt dadurch eine große Wärmeübertragungsfläche.

Vorzugsweise ist das Wärmespeichermedium Wasser, welches sich als Wärmespeichermedium besonders gut eignet, da der Phasenwechsel festflüssig in einem für das Betreiben der Wärmespeichanordnung günstigen Temperaturbereich erfolgt und dabei eine hohe Wärmemenge gespeichert bzw. abgegeben wird. Außerdem ist Wasser umweltfreundlich und kostengünstig.

In einer bevorzugten Ausgestaltung ist der mindestens eine flexible Wärmespeicherbehälter ein aus Kunststoff hergestellter Foliensack. Beim Phasenwechsel des Wärmespeichermediums vom flüssigen in einen festen Zustand nimmt das Volumen mancher Wärmespeichermedien, insbesondere Wasser, aufgrund der Dichteanomalie zu. Die im Stand der Technik offenbarten steifen Wärmespeicherbehälter können aufgrund der Volumenzunahme der Wärmespeichermedien beschädigt bzw. vollständig zerstört werden. Der flexible Wärmespeicherbehälter kann dagegen während der Volumenzunahme beim Erstarrungsprozess aufgrund seiner Verformbarkeit die Form verändern, wodurch das Volumen innerhalb des Wärmespeicherbehälters bei gleichem Außenumfang ansteigt und der Wärmespeicherbehälter nicht beschädigt bzw. zerstört wird.

Vorzugsweise ist der mindestens eine flexible Wärmespeicherbehälter mit einer Wärmestrahlen-reflektierenden Schicht beschichtet, wodurch die Wärmestrahlung zwischen der Umgebung und dem Wärmespeicherbehälter vermindert und dadurch beispielsweise die Kondensation an dem Außenseite des Wärmespeicherbehälters verhindert wird.

In einer vorteilhaften Ausgestaltung ist ein Wärmetauscherelementen-Teppich vorgesehen, der aus mehreren steifen Wärmetauscherelementen zusammengesetzt ist, die mit ihren Grundflächen nebeneinander in einer einzigen Horizontalebene angeordnet sind. Dabei liegt der Wärmetauscherelementen-Teppich mit den Grundflächen bzw. Deckflächen der Wärmetauscherelemente an der Unterseite oder der Oberseite des flexiblen Wärmespeicherbehälters an, wobei die Wärmetauscherelemente vorzugsweise fluidisch parallel zueinander geschaltet sind. Dadurch können große Wärmemengen zwischen dem Wärmeträger und dem Wärmespeichermedium übertragen werden, da der Wärmetauscherelementen-Teppich und der Wärmespeicherbehälter eine große Wärmeübertragungsfläche aufweisen. Durch die fluidisch parallele Schaltung der einzelnen Wärmetauscherelemente erfolgt außerdem eine gleichmäßige Wärmeübertragung zwischen dem Wärmeträger und dem Wärmespeichermedium.

Vorzugsweise sind mindestens zwei Wärmetauscherelemente fluidisch getrennt voneinander vorgesehen, wobei das erste Wärmetauscherelement mit einem ersten Wärmeträgerkreislauf und das zweite Wärmetauscherelement mit einem zweiten Wärmeträgerkreislauf fluidisch verbindbar sind. Auf diese Weise kann dem Wärmespeichermedium Wärme über den ersten Wärmeträgerkreislauf entzogen und gleichzeitig über den zweiten Wärmeträgerkreislauf zugeführt werden, wobei der erste Wärmeträgerkreislauf mit einem Verbraucher und der zweite Wärmeträgerkreislauf mit einer Wärmequelle verbunden ist.

In einer bevorzugten Ausgestaltung sind mindestens zwei separate Wärmespeicherbehälter vorgesehen, wobei das steife Wärmetauscherelement vertikal zwischen dem ersten Wärmespeicherbehälter und dem zweiten Wärmespeicherbehälter angeordnet ist. Dabei liegt das Wärmespeicherelement mit der Grundfläche am ersten Wärmespeicherbehälter und mit der Deckfläche am zweiten Wärmespeicherbehälter an, wodurch die Wärmeübertragung zwischen dem Wärmetauscherelement und beiden Wärmespeicherbehältern erfolgt. Auf diese Weise kann die Menge des Wärmespeichermediums vergrößert und dadurch die Wärmespeichermenge erhöht werden. Dabei weist vorzugsweise der obere Wärmespeicherbehälter eine geringere vertikale Höhe auf als der untere Wärmespeicherbehälter.

Vorzugsweise sind die steifen Wärmetauscherelemente über flexible Verbindungselemente miteinander verbunden, wodurch die Wärmetauscherelemente bereits vor der Endmontage der Wärmetauscheranordnung zum Wärmetauscherelementen-Teppich verbunden werden können und dadurch die Endmontage erleichtern. Durch die flexible Verbindung der Wärmetauscherelemente können die Wärmetauscherelemente beispielsweise gerollt und dadurch leichter transportiert werden und schließlich einfacher installiert werden.

Gemäß einer vorteilhaften Ausgestaltung weisen die Wärmetauscherelemente Versteifungsrippen auf, die sich, ausgehend von der Grundfläche, senkrecht erstrecken. Durch die Versteifungsrippen können Wärmetauscherelemente dünnwandig ausgeführt werden und dennoch hohe mechanische Belastungen ertragen, wobei insbesondere senkrecht zur Grundfläche wirkende hohe Belastungen aufgenommen werden können.

In einer bevorzugten Ausgestaltung ist eine Wärmeisolationswanne vorgesehen, in der das mindestens eine Wärmetauscherelement und der mindestens eine Wärmespeicherbehälter liegen, wodurch der Wärmeaustausch mit dem Erdreich reduziert wird. Die Wärmeisolationswanne sollte dabei aus einem thermisch gut isolierenden Material ausgeführt sein.

Die erfindungsgemäße Gebäudeheizungsanlage nach Anspruch 13 sieht eine erfindungsgemäße Wärmetauscheranordnung vor, die zusammen mit beispielsweise einer Wärmepumpe und Solarkollektoren eine nahezu autarke Wärmeversorgung eines Gebäudes ermöglicht.
Figur 1 zeigt schematisch eine erfindungsgemäße Ausführung einer Wärmespeicheranordnung in Seitenansicht.
Figur 2 zeigt ein Wärmetauscherelement der in Figur 1 beschriebenen Wärmespeicheranordnung in Draufsicht.
Figur 3 zeigt eine erste Gebäudeheizungsanlage mit einer in Figur 1 beschriebenen Wärmespeicheranordnung in schematischer Ansicht.
Figur 4 zeigt eine zweite Gebäudeheizungsanlage mit einer in Figur 1 beschriebenen Wärmespeicheranordnung in schematischer Ansicht.

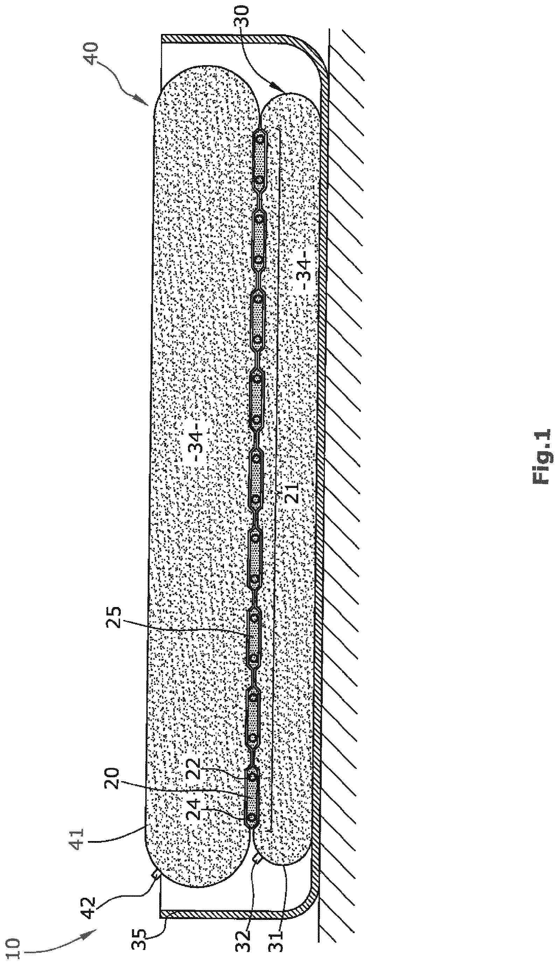

Die in der Figur 1 dargestellte Wärmetauscheranordnung 10 umfasst einen ersten Wärmespeicherbehälter 30 und einen zweiten Wärmespeicherbehälter 40, die beide jeweils aus einem aus Kunststoff hergestellten Foliensack 31, 41 ausgeführt sind und in einer Wärmeisolationswanne 35 angeordnet sind. Beide Wärmespeicherbehälter 30, 40 weisen jeweils einen Einlass 32, 42 auf, durch die die Wärmespeicherbehälter 30, 40 mit einem Wärmespeichermedium 34, üblicherweise Wasser, befüllt bzw. befüllbar sind. Die beiden Wärmespeicherbehälter 30, 40 unterscheiden sich in der vertikalen Erstreckung, wobei der zweite (obere) Wärmespeicherbehälter 40 eine im Verhältnis 2/3 zu 1/3 größere vertikale Erstreckung als der erste (untere) Wärmespeicherbehälter 30 aufweist.

Vertikal zwischen den beiden Wärmetauscherbehältern 30, 40 ist ein Wärmetauscherelementen-Teppich 21 angeordnet, der sich aus neun Wärmetauscherelementen 20 zusammensetzt, die in einer Horizontalebene angeordnet und über flexible Verbindungelemente miteinander fluidisch verbunden sind. Der Wärmetauscherelementen-Teppich 21 liegt mit den Grundflächen der Wärmetauscherelemente 20 an dem ersten Wärmespeicherbehälter 30 und mit den Deckflächen der Wärmetauscherelemente 20 am zweiten Wärmespeicherbehälter 40 an. Dabei werden die Wärmespeicherelemente 20 des Wärmetauscherelementen-Teppichs 21 aufgrund der Verformbarkeit der Foliensäcke 31, 41 vollständig durch die Wärmespeicherbehälter 30, 40 umschlossen.

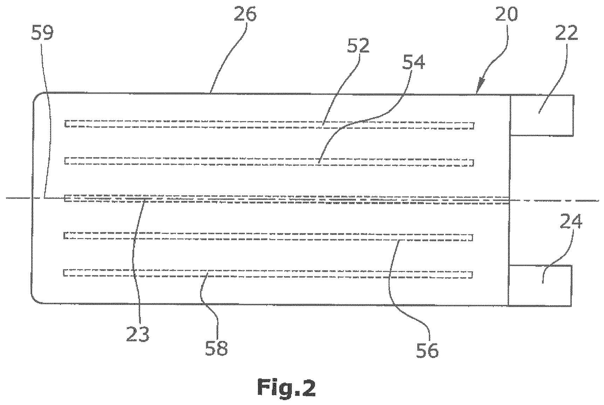

Die Figur 2 zeigt eine Draufsicht eines Wärmetauscherelements 20. Das Wärmetauscherelement 20 weist ein aus einem steifen Kunststoff hergestelltes Gehäuse 26 auf, in dem ein Einlass 22 und ein Auslass 24 ausgebildet sind. Durch den Einlass 22 strömt ein nicht-wässriger Wärmeträger 25, dessen Gefierpunkt unter -10 °C liegt, in das Wärmetauscherelement 20 ein und verlässt das Wärmetauscherelement 20 durch den Auslass 24. Die Führung des Wärmeträgers 25 im Wärmetauscherelement 20 erfolgt über die Wände des Gehäuses 26 und einer darin ausgebildeten mittigen Leitungsrippe 23. Dabei strömt der Wärmeträger ausgehend vom Einlass 22 zu einer dem Einlass 22 gegenüber angeordneten Öffnung 59 und strömt von dort aus zum Auslass 24. Zusätzlich zur Leitungsrippe 59 sind in dem Wärmetauscherelement 20 Versteifungsrippen 52, 54, 56, 58 angeordnet, die zur Erhöhung der Steifigkeit des Wärmetauscherelements 20 dienen.

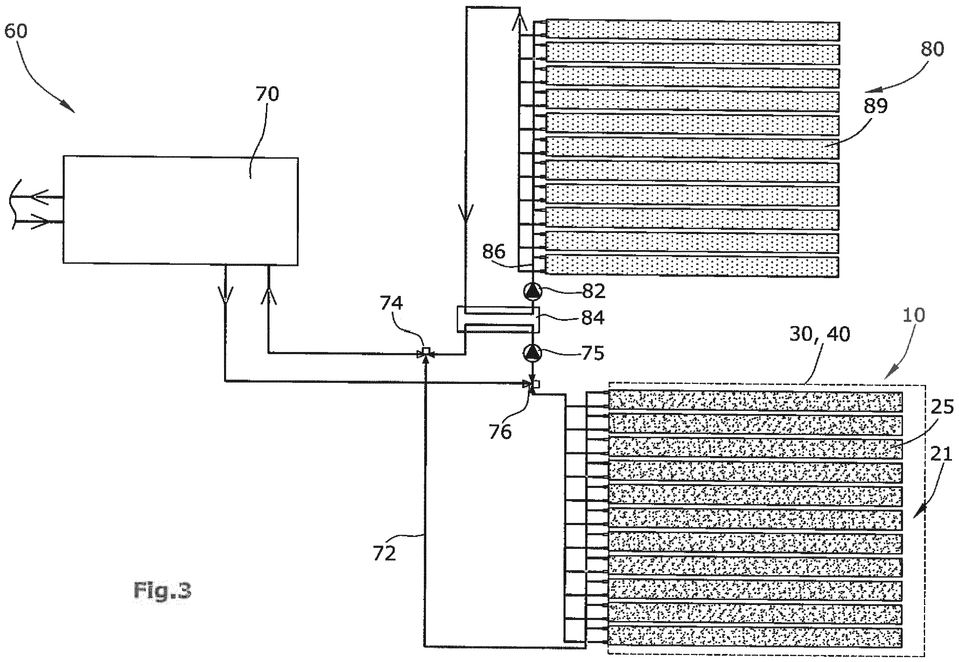

Figur 3 zeigt ein Gebäudeheizungsanlange 60 mit einem Solarkollektor 80, einer Wärmepumpe 70 und einer Wärmespeicheranordnung 10. Die Wärmespeicheranordnung 10 ist gemäß der Ausführung aus Figur 1 und 2 ausgeführt und weist einen Wärmetauscherelementen-Teppich 21 auf, der vertikal zwischen den beiden Wärmespeicherbehältern 30, 40 angeordnet ist. Die Wärmespeicherbehälter 30, 40 sind in Figur 3 nur gestrichelt angedeutet. Die jeweiligen Einlässe 22 und Auslässe 24 der Wärmetauscherelemente 20 sind alle mit einen Wärmeträgerkreislauf 72 fluidisch verbunden, wobei die Einlässe 22 sowie die Auslässe 24 parallel zueinander geschaltet sind, so dass alle Wärmetauscherelemente 20 gleichzeitig durchströmt werden.

Der Wärmeträgerkreislauf 72 weist ein erstes Ventil 74 und ein zweites Ventil 76 auf. In einem ersten Schaltzustand der Ventile 74, 76 zirkuliert der Wärmeträger 25 zwischen den Wärmetauscherelementen 20 und der Wärmepumpe 70, wobei die Wärme vom Wärmespeichermedium 34 zum Wärmeträger 25 auf einem relativ niedrigen Temperaturniveau übertragen und der Wärmepumpe 70 zugeführt wird. Die Wärmepumpe 70 hebt das Temperaturniveau an, so dass die Wärme zum Heizen von Gebäuden oder für das Aufheizen von Warmwasser verwendet werden kann.

In einem zweiten Schaltzustand der Ventile 74, 76 zirkuliert der Wärmeträger 25 zwischen einem Wärmetauscher 84 und den Wärmetauscherelementen 20, wobei die Zirkulation durch eine Pumpe 75 bewirkt wird. Zwischen dem Wärmetauscher 84 und dem Solarkollektor 80 zirkuliert in einem weiteren Wärmeträgerkreislauf 86 eine Wärmeträgerflüssigkeit 89, wobei die Zirkulation durch eine Pumpe 82 bewirkt wird. Dabei wird die Wärme, die durch die Sonneneinstrahlung und/oder die Umgebungstemperatur von der Wärmeträgerflüssigkeit 89 aufgenommen, im Wärmetauscher 84 auf den Wärmeträger 25 übertragen und dem Wärmespeichermedium 34 zugeführt.

Durch ein regelmäßiges Umschalten zwischen den beiden Schaltzuständen der Ventile 74, 76 kann dem Wärmespeichermedium 34 Wärme abwechselnd entzogen und zugeführt werden. Wenn dem Wärmespeichermedium 34 keine bzw. wenig Wärme zugeführt wird, kann der Wärmespeicheranordnung 10 solange Wärme durch die Wärmepumpe 70 entzogen werden, bis das gesamte Wärmespeichermedium 34 gefroren ist und keine latente Wärme mehr zur Verfügung steht. Auf diese Wiese kann die Wärmepumpe 70 auch an kalten Tagen zum Heizen von Gebäuden und Aufheizen von Warmwasser genutzt werden.

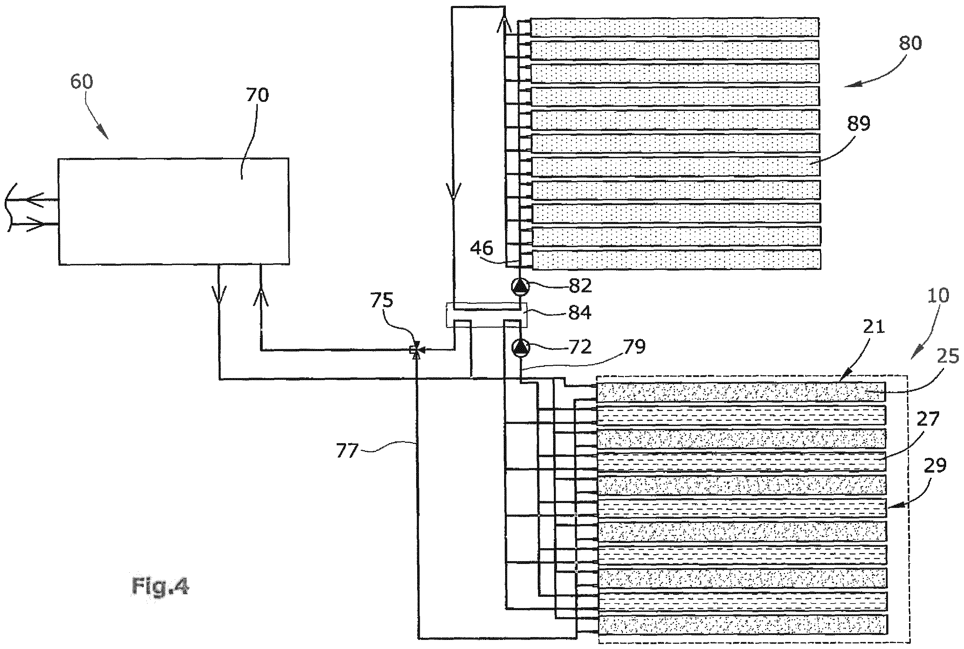

Figur 4 zeigt eine zweite Ausführung einer Gebäudeheizungsanlange 60' mit den gleichen Komponenten wie die erste Ausführung der Gebäudeheizungsanlange 60. Im Unterschied zur ersten Ausführung weist die Wärmespeicheranordnung 10 einen ersten Wärmetauscherelementen-Teppich 21 und einen separaten zweiten Wärmetauscherelementen-Teppich 29 auf, die beide in einer gemeinsamen Horizontalebene angeordnet sind. Der erste Wärmetauscherelementen-Teppich 21 ist mit einem ersten Wärmeträgerkreislauf 77 und der zweite Wärmetauscherelementen-Teppich 29 ist mit einem zweiten Wärmeträgerkreislauf 79 verbunden.

Der erste Wärmeträgerkreislauf 77 entspricht dem Wärmeträgerkreislauf 72 aus der ersten Ausführung, wobei der Wärmeträgerkreislauf 77 ein Ventil 75 aufweist. In einem ersten Schaltzustand des Ventils 75 ist der erste Wärmeträgerkreislauf 77 mit der Wärmepumpe 70 fluidisch verbunden, so dass die Wärmepumpe 70 dem Wärmespeichermedium 34 Wärme entziehen kann. In einem zweiten Schaltzustand des Ventils 75 strömt der Wärmeträger 25 des ersten Wärmeträgerkreislaufs 77 über den Wärmetauscher 84 zurück zu den Wärmetauscherelementen 20 und wird zusätzlich zur Wärmeübertragung zwischen dem Solarkollektor 80 und der Wärmespeicheranordnung 10 genutzt.

Im zweiten Wärmeträgerkreislauf 79 zirkuliert ein Wärmeträger 27 zwischen dem Wärmetauscher 84 und dem zweiten Wärmetauscherelementen-Teppich 29, wodurch die durch die Sonnenkollektoren 80 aufgenomme Wärme auf das Wärmespeichermedium 34 übertragen wird.

Es sind auch andere konstruktive Ausführungsformen im Vergleich zur beschriebenen Ausführungsform möglich, die in den Schutzbereich des Hauptanspruchs fallen. Es können beispielsweise die Wärmetauscherlelemente 20 oder die Wärmespeicherbehälter 30, 40 anders ausgeführt sein und beispielsweise eine andere Form aufweisen. Auch kann die Heizungsanlage 60, 60' anders ausgeführt sein und beispielsweise andere Komponenten aufweisen, so dass die Wärmeträgerkreisläufe anders ausgeführt sind.

## Patentansprüche

1. Wärmespeicheranordnung (10) zur Zwischenspeicherung von Wärmeenergie, mit
mindestens einem steifen Wärmetauscherelement (20), das einen Flüssigkeitseinlass (22) und einen Flüssigkeitsauslass (24) aufweist und in dem ein flüssiger nicht-wässeriger Wärmeträger (25) strömt, dessen Gefrierpunkt unter -10°C liegt, und mindestens einem flexiblen und geschlossenen Wärmespeicherbehälter (30, 40), welcher ein Wärmespeichermedium (34) enthält, wobei der flexible Wärmespeicherbehälter (30, 40) an dem mindestens einen steifen Wärmetauscherelement (20) anliegt, so dass eine Wärmeübertragung zwischen dem flüssigen Wärmeträger (25) und dem Wärmespeichermedium(32) erfolgt.

2. Wärmespeicheranordnung (10) Anspruch 1, **dadurch gekennzeichnet, dass** das Wärmespeichermedium (34) Wasser ist.

3. Wärmespeicheranordnung (10) nach Anspruch 1 oder 2, **dadurch gekennzeichnet, dass** der mindestens eine flexible Wärmespeicherbehälter (30, 40) ein aus Kunststoff hergestellter Foliensack (31, 41) ist.

4. Wärmespeicheranordnung (10) nach einem der vorangegangenen Ansprüche, **dadurch gekennzeichnet, dass** der mindestens eine flexible Wärmetauscherbehälter (30, 40) mit einer Wärmestrahlen-reflektierenden Schicht beschichtet ist.

5. Wärmespeicheranordnung (10) nach einem der vorangegangenen Ansprüche, **dadurch gekennzeichnet, dass** ein Wärmetauscherelementen-Teppich (21) vorgesehen ist, der mehrere steife Wärmetauscherelemente (20) aufweist, die mit ihren Grundflächen nebeneinander in einer Horizontalebene angeordnet sind, wobei jedes steife Wärmetauscherelement (20) an dem mindestens einem flexiblen Wärmetauscherbehälter (30, 40) anliegt.

6. Wärmespeicheranordnung (10) nach Anspruch 5, **dadurch gekennzeichnet, dass** die Wärmetauscherelemente (20) fluidisch parallel zueinander geschaltet sind.

7. Wärmespeicheranordnung (10) nach Anspruch 5, **dadurch gekennzeichnet, dass** mindestens zwei Wärmetauscherelemente (20) fluidisch getrennt voneinander vorgesehen sind, wobei das erste Wärmetauscherelement (20) mit einem ersten Wärmeträgerkreislauf (77) und das zweite Wärmetauscherelement (20) mit einem zweiten Wärmeträgerkreislauf (79) fluidisch verbindbar sind.

8. Wärmespeicheranordnung (10) nach einem der vorangegangenen Ansprüche, **dadurch gekennzeichnet, dass** mindestens zwei separate Wärmespeicherbehälter (30, 40) vorgesehen sind, wobei das steife Wärmetauscherelement (20) vertikal zwischen dem ersten Wärmespeicherbehälter (30) und dem zweiten Wärmespeicherbehälter (40) angeordnet ist.

9. Wärmespeicheranordnung (10) nach Anspruch 8, **dadurch gekennzeichnet, dass** das erste Wärmespeicherelement (30) eine geringere vertikale Höhe aufweist als das zweite Wärmespeicherelement (40).

10. Wärmespeicheranordnung (10) nach einem der Ansprüche 5 bis 9, **dadurch gekennzeichnet, dass** die steifen Wärmetauscherelemente (20) über flexible Verbindungselemente miteinander verbunden sind.

11. Wärmespeicheranordnung (10) nach einem der vorangegangenen Ansprüche, **dadurch gekennzeichnet, dass** das mindestens eine Wärmetauscherelement (20) Versteifungsrippen (52, 54, 56, 58) aufweist, die senkrecht zur Grundfläche des Wärmetauscherelements (20) verlaufen.

12. Wärmespeicheranordnung (10) nach einem der vorangegangenen Ansprüche, **dadurch gekennzeichnet, dass** eine Wärmeisolationswanne (35) vorgesehen ist, in der das mindestens eine Wärmetauscherelement (20) und der mindestens eine Wärmespeicherbehälter (30, 40) liegen.

13. Gebäudeheizungsanlage (60, 60') mit einer Wärmespeicheranordnung (10) nach einem der Ansprüche 1 - 12, wobei die Wärmespeicheranordnung (10) zumindest mit einer Wärmepumpe (70) verbunden ist.
